# EUROPEAN PATENT APPLICATION

(11) **EP 4 451 099 A1**
(43) Date of publication of application: **23.10.2024**
(21) Application number: 23275063.8
(22) Date of filing: 19.04.2023
(51) Int. Cl.: G06F 3/0481

(54) **TEMPORALLY SYNCHRONISING FIRST AND SECOND USERS OF RESPECTIVE FIRST AND SECOND USER INTERFACE DEVICES**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present disclosure relates to a computer-implemented method of temporally synchronising first and second users interacting with a graphical representation of a sequence of events on respective first and second user interface devices. The computer-implemented method comprises: displaying, on each of the first and the second user interface devices, the graphical representation; receiving, from the first user interface device, a user input dropping a flag dropped at a location in the graphical representation; displaying, by the first and the second user interface devices, the flag at the location and at every time point of the graphical representation; receiving, from the second user interface device, a user input selecting the flag; and temporally adjusting, on the second user interface device, the graphical representation to a time point that the flag was dropped

## Description

### FIELD OF THE INVENTION

The present invention relates to user interfaces. More specifically, the subject-matter relates to displaying one first and second user interface devices a graphical representation representing a sequence of events.

### BACKGROUND

Multiple users can collaboratively work using a plurality of user interface devices. For example, a plurality of user interface devices may each display a graphical representation of a sequence of events, e.g. real-world events such as a part moving through a facility. The graphical representation may have a time span and may include moving parts over that time span. Different users may be viewing different the graphical representation at different time points. In such cases, a first user of a first user interface device may view the graphical representation at a different state than a second user of the second user interface device. For example, a first user may view a part at point A at a first time point, and a second user may be simultaneously viewing point A at a second time point when the part has been moved to point B.

When collaborating in environments where there are special and temporal domains to navigate, it is difficult for users of different devices to synchronise.

### SUMMARY

Embodiments of the present invention are intended to address the above technical problems.

According to an aspect of the present invention, there is provided a computer-implemented method of temporally synchronising first and second users interacting with a graphical representation of a sequence of events on respective first and second user interface devices. The computer-implemented method comprises: displaying, on each of the first and the second user interface devices, the graphical representation; receiving, from the first user interface device, a user input dropping a flag at a location in the graphical representation; displaying, by the first and the second user interface devices, the flag at the location and at every time point of the graphical representation; receiving, from the second user interface device, a user input selecting the flag; and temporally adjusting, on the second user interface device, the graphical representation to a time point that the flag was dropped.

The events may be real-world events, e.g. an entity in a scene or environment.

Advantageously, temporally adjusting the second user to the time point at which the flag has been dropped enhances the continued guidance of the human machine interaction. This is because the users do not have to manually navigate multiple domains, e.g. special and temporal domains, when trying to collaborate. Instead, a simple flag which automatically adjusts the graphical representation in the temporal domain when selected, enables the users to remain synchronised more easily.

In an embodiment, the computer-implemented method further comprises: labelling, on the plurality of user interfaces, the flag in the graphical representation with the time point that the flag was dropped.

In an embodiment, the flag is substantially conical in shape.

In an embodiment, the flag extends substantially upwards from its apex.

In an embodiment, the user input selecting the flag comprises a user input through the second user interface device or a user input through a user input device, wherein optionally the user input device comprises a mouse.

In an embodiment, the graphical representation represents a sequence of events associated with a part in a facility according to a plan received from a planning tool.

In an embodiment, the sequence of events comprises events selected from a list of events including: moving the part, constructing one or more constituent pieces of the part, assembling the part, machining the part, painting the part, cutting the part, and drilling the part.

In an embodiment, the facility is selected from a list of facilities including: a warehouse and a factory.

In an embodiment, the graphical representation represents a sequence of events associated with real-world entities in a scene, wherein optionally the scene is a combat scene.

In an embodiment, the graphical representation is a multiplayer videogame and wherein the first and second users are respective first and second players of the multiplayer videogame.

In an embodiment, the displaying, on each of the first and the second user interface devices, the graphical representation comprises: displaying, on the first user interface device, the graphical representation at a first time point of the graphical representation; and displaying simultaneously, on the second user interface device, the graphical representation at a second time point of the graphical representation, wherein the first time point of the graphical representation is different to the second time point of the graphical representation.

In an embodiment, the computer-implemented method further comprises: displaying, on each of the first and second user interface devices, a timeline covering all time points of the graphical representation; receiving, from the first user interface device, a first time selection on the timeline to select the first time point; and receiving, from the second user interface device, a second time selection on the timeline to select the second time point.

According to an aspect of the present invention, there is provided a computer-readable storage medium having instructions stored thereon that, when executed by one or more processors, cause the one or more processors to perform the computer-implemented method of any preceding aspect or embodiment.

According to an aspect of the present invention, there is provided a system comprising: first and second user interfaces; one or more processors; and storage storing instructions that, when executed by the one or more processors, cause the one or more processors to perform the method of any of the preceding aspects or embodiments.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 shows a block diagram of a system for managing a plan of a sequence of events of a part in a facility, according to one or more embodiments;
Figure 2 shows a screen shot on a user interface from the system of Figure 1 showing a graphical representation and a timeline of the sequence of events, according to one or more embodiments;
Figure 3 shows a screen shot of a user interface from the system of Figure 1 showing a user input modifying the graphical representation of the sequence of events, according to one or more embodiments;
Figure 4 shows a screen shot of a user interface from the system of Figure 1 showing a flag dropped by a user input, according to one or more embodiments;
Figure 5 shows a section of a screen shot of a user interface from the system of Figure 1 showing the flag of Figure 4, according to one or more embodiments;
Figure 6 shows a flow chart summarising a computer-implemented method of managing a plan of a sequence of events associated with a part in a facility, according to one or more embodiments; and
Figure 7 shows a flow chart summarising a computer-implemented method of temporally synchronising first and second users interacting with a graphical representation of a sequence of events on respective first and second user interface devices.

### DETAILED DESCRIPTION

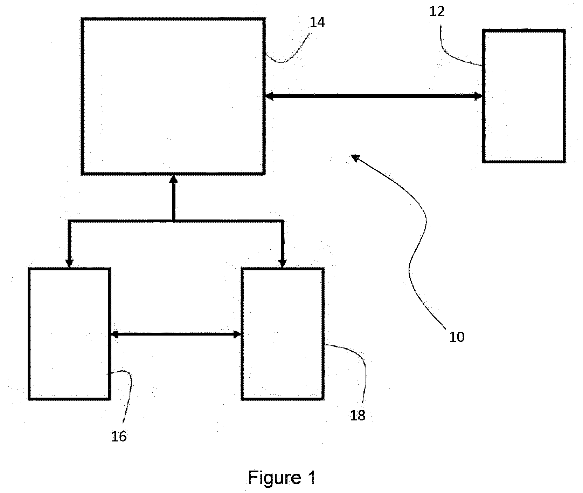

With reference to Figure 1, a system 10 includes a planning terminal 12, a central server 14, a first user terminal 16, and a second user terminal 18. Each of the planning terminal 12, central server 14, first user terminal 16 and second user terminal 18 may include a processor and storage. The planning terminal 12, and first user terminal 16, and the second user terminal 18 each include a user interface. The first and second user terminals may also be called first and second user interfaces or first and second user interface devices. The user interface may be rendered on a display, which may be a touch screen.

One or more of the storages in the system 10 may have non-transitory computer-readable media stored thereon that, when executed by the one or more processors, cause the one or more processors to perform the various methods described herein.

A planning tool may be generated, managed, and stored on the planning terminal 12 using a planning tool. The planning tool may capture a plan of a sequence of events. The sequence of events may be real-world events occurring over time. The sequence of events may be associated with a part in a facility. The part may be a physical, real-world, part, e.g. a piece of equipment or hardware. The facility may be a physical, real-world, facility, e.g. a factory or a warehouse. The sequence of events comprises events selected from a list of events including: moving the part, constructing one or more constituent pieces of the part, assembling the part, machining the part, painting the part, cutting the part, and drilling the part, etc.

The planning tool may include a timeline of the sequence of events. The timeline may be in the form of a Gannt chart.

The server 14 may be configured to extract the plan from the planning tool 12, and send it to the first and second terminals 16, 18. In other embodiments, the planning terminal may send the plan to the server 14 so push rather than pull the data. In this way, the first and second terminals receive, from a planning tool, the plan of the sequence of events associated with the part in the facility. The first and second terminals 16, 18, generate automatically a graphical representation illustrating the sequence of events over time. The graphical representation may be generated using various generating tools. For example, a look-up table may be provided with various parts included together with various states including states associated with the events described above. The generating tool may also include a graphical representation of the facility. The generating tool may configure the part in the facility over time based on the plan, e.g. position and orient the plan, and move it from one location to another over time according to the plan.

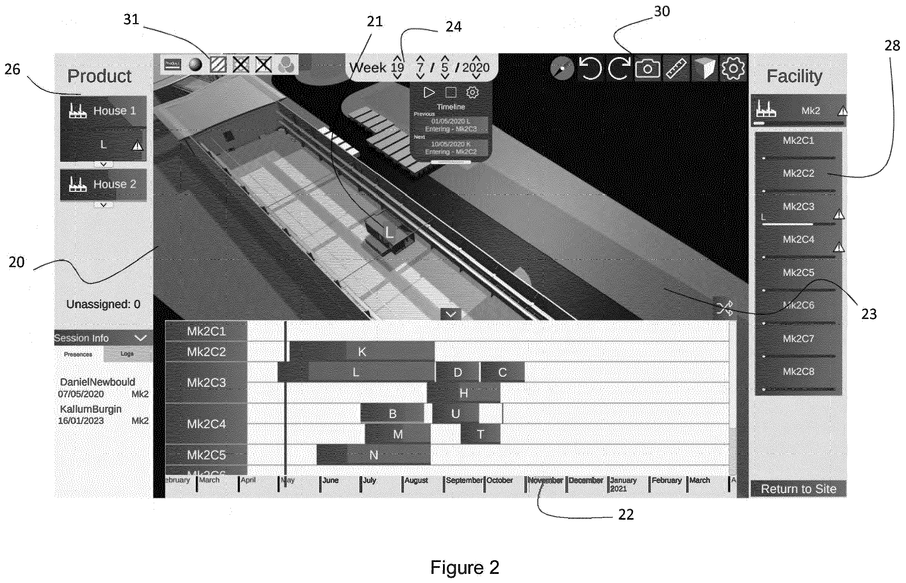

The user interfaces of the first and second terminals 16, 18, may be considered a plurality of user interfaces. With reference to Figure 2, the graphical representation 20 may be presented on the plurality of user interfaces. The graphical representation 20 may show the part 21 and the facility 23. In addition, a timeline 22 illustrating the plan of the sequence of events may be presented on the user interfaces. The timeline 22 may include a plurality of time points, each being selectable by a user of the respective user interface device to view the graphical representation of the sequence of events at the selected time point. As indicated above, in some views, the timeline 22 may be in the form of a Gantt chart. Other items that may be displayed included a current time point 24, a part (or product) list 26, a facility locations list 28, user interface elements 30, and a menu 31 of functional items. The current time point 24 may display any of the time, day, and date. The current time point 24 represents a time point on the timeline associated with the facility as currently displayed on the user interface. The current time point 24 may be different for each user interface. The part list 26 may include a plurality of parts. The plurality of parts may be parts displayed in the graphical representation at some point of the plan. The facility locations list 28 may include a plurality of locations within the facility which may be visible in the graphical representation at one or more time points of the plan. The user interface elements 30 may include a plurality of icons, each associated with a function selectable by a user to view the graphical representation in various ways, e.g. rotate, zoom, orient, etc. The user interface elements may also control display of the graphical representation, e.g. play, pause, stop, rewind, fast forward, etc.

The graphical representation may be displayed at a first time point of the plan on the first user interface device 16. The graphical representation may be displayed at a second time point of the plan on the second user interface device 18. The first time point and the second time point may be different. For example, the first time point may occur before the second time point chronologically.

The first user interface device 16 may receive a first time selection on the timeline to select the first time point. The second user interface device 18 may receive a second time selection on the timeline to select the second time point. The first and second time selections may include users tapping on the timeline 22 at a specific time point of interest, or manually entering one or more of a time, day, and date in the current time point 24. As an alternative to using the touch screen, the first and second time selections may be entered using a separate user input device, e.g. a keyboard or a mouse.

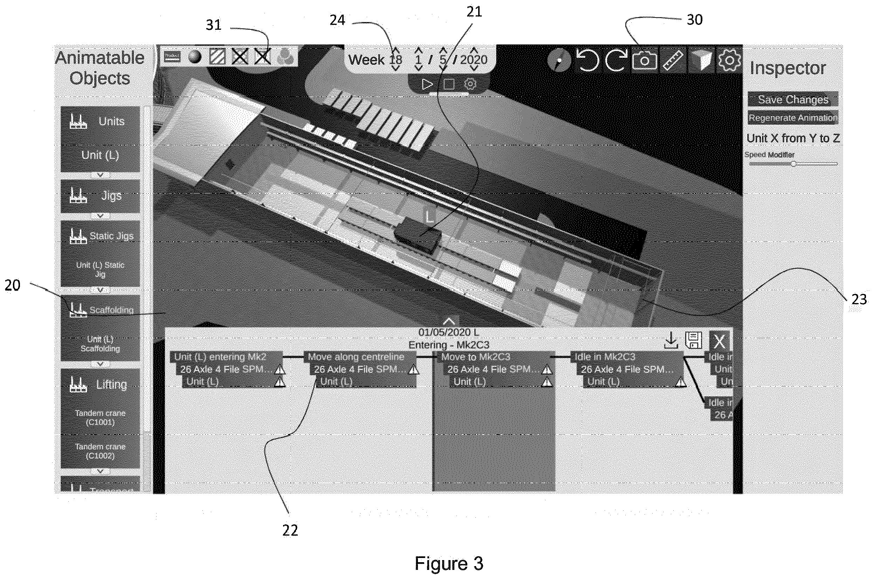

With reference to Figure 3, on either the first or second user interface device 16, 18, a user input may be received which changes the graphical representation to modify the sequence of events. The user input changing the graphical representation includes one or more changes selected from a list of changes including: changing a location of the part within the facility, changing an event of the sequence of events, and changing an orientation of the part. The user input may involve a user tapping the touchscreen to select the part 21, and dragging the part to another location, then releasing the part by removing contact with the touchscreen. This is an illustration for changing the location of the part within the facility. The orientation can be changed by first selecting the part by tapping the screen, then swiping the screen to rotate the part, then removing contact with the screen to drop the part. Changing the event of the sequence of events may comprise replacement one event, e.g. machining, with another event, e.g. drilling. This may be achieved by first tapping the part, selecting a different operation, e.g. painting, from a menu by tapping the touchscreen, and then deselecting the part by tapping the part again. The changing the event may also be considered as changing an order of the sequence of events. For example, if part is first moved from one position to another and then re-oriented, it is possible for a user to change that using a combination of the above operations to re-orient the part first and then change its position.

Once the user has made the change, the timeline 22 is updated to reflect the change and the updated timeline is displayed on the user interface device. The updated timeline and the updated graphical representation may also be displayed on all other user interface devices.

The plan may be updated to correspond to the graphical representation and the timeline 22. The updated plan may be output via the server (Figure 1) to the planning tool on the planning terminal 12, where a master plan may reside.

In addition to the user input updating the graphical representation, one of the user interface devices 16, 18, may receive a user input updating the timeline 22 to modify the sequence of events. For example, the user may tap the touchscreen, or select with an input device such as a mouse, one of the bars of the Gannt chart and change its duration or location on the timeline 22. The graphical representation may be updated based on the user input updating the timeline 22. For example, if the timeline is updated so that a part is moved position over a shorter time period, the part 21 in the graphical representation will move slower when changing position. The updated timeline may be presented on the user interface device together with the updated graphical representation. The updated timeline 22 and updated graphical representation 20 may be presented or displayed on each of the other user interface devices.

The updates to the timeline result in updates to the plan. As above, the updated plan may be sent to the planning tool on the planning terminal 12 via the server 14.

In this way, it is easier for collaboratively updating a plan compared with using the planning tool alone. This is because the planning tool requires specialist skills to operate and because it does not lend itself well to collaboration using multiple user interface devices.

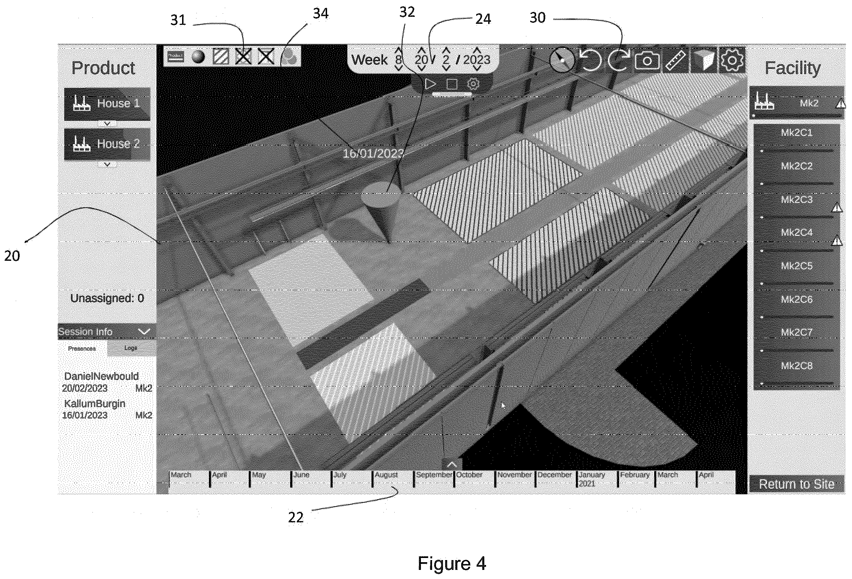

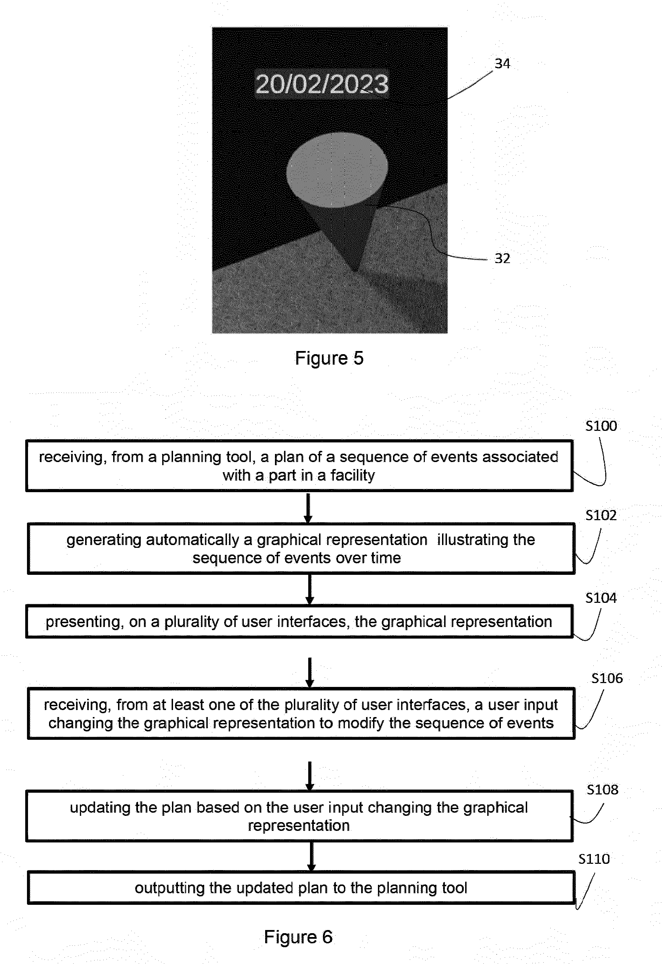

With reference to Figures 4 and 5, one of the plurality of user interfaces receives a user input dropping a 32 flag at a location in the graphical representation. The location may be a location where the user is concerned something is not correct with the sequence of events, or could be improved. The user may drop the flag by first selecting a flag from the menu 31 and then tapping on the graphical representation at the location where the flag is going to be dropped.

The flag is presented or displayed on each user interface device at the location and is visible at every time point of the timeline and graphical representation. In this way, if two users are viewing the graphical representation at different time points, and looking at the same location where the flag has been dropped, both users will see the flag. In other words, the flag is visible at every time point in the graphical representation.

The flag may be labelled with a label 34. The label 34 may indicate a time at which the flag was dropped in the graphical representation. For example, the time, day, and/or date shown in the current time point 24 may be included in the label 34.

The flag may be substantially conical in shape. The flag may extend substantially upwards from its apex. In other words, the flag 32 may be an upside down cone. The colour of the flag 32 may be contrasting to other colours in the graphical representation. For example, the flag 32 may be a bright colour, e.g. orange, yellow, red, or another colour. Preferably, the flag 32 may be a different colour to the other colours used in the graphical representation.

Another of the user interface devices than the one which received the user input dropping the flag 32, may receive a user input selecting the flag. For example, if the flag is dropped on the first user interface device 16 (Figure 1), the user input selecting the flag may be received by the second user interface device 18. The user input selecting the flag may be received by a user tapping the touchscreen or input through a user input device, such as a mouse.

The graphical representation displayed on the user interface device which received the user input selecting the flag, e.g. the second user interface device 18, may be temporally adjusted to a time point that the flag was dropped, or a time point shown in the label 34. In other words, graphical representation on the second user interface device 18 may be moved to the time point at which the flag was dropped on the first user interface device 16. This automatic temporal adjustment in response to receiving the user input selecting the flag enables temporal synchronisation of the respective users of the first and second user interface devices 16, 18. This is particularly advantageous when collaboratively working on the same plan on a plurality of user interface devices. For example, one user interface device may lose connection, when connection is reestablished, the user of that user interface device can resume collaboration by clicking on a flag dropped by a user of the other user interface device.

This principle may be extended to other fields and is not limited to use with a plan. For example, the graphical representation may be an animation that users are collaboratively working on together, e.g. creating a cartoon sequence. In other embodiments, the graphical representation may represent a sequence of events associated with real-world entities in a scene, where optionally the scene is a combat scene. In this scenario, the entities may be people, e.g. civilians or soldiers, vehicles, buildings, landmarks, etc. In other embodiments, the sequence of events may be a sequence of events associated with a multiplayer videogame, wherein the first and second users are respective first and second players of the multiplayer videogame.

With reference to Figure 6, one or more of the foregoing embodiments may be summarised as a computer-implemented method of managing a plan of a sequence of events associated with a part in a facility. The method comprises: receiving S100, from a planning tool, a plan of a sequence of events associated with a part in a facility; generating S102 automatically a graphical representation illustrating the sequence of events over time; presenting S104, on a plurality of user interfaces, the graphical representation; receiving S106, from at least one of the plurality of user interfaces, a user input changing the graphical representation to modify the sequence of events; updating S108 the plan based on the user input changing the graphical representation; and outputting S110 the updated plan to the planning tool.

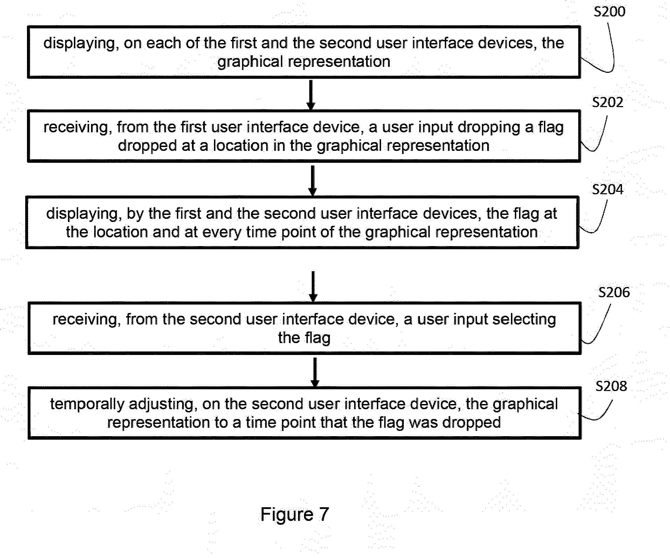

With reference to Figure 7, one or more of the foregoing embodiments may be summarised as a computer-implemented method of temporally synchronising first and second users interacting with a graphical representation of a sequence of events on respective first and second user interface devices. The method comprises: displaying S200, on each of the first and the second user interface devices, the graphical representation; receiving S202, from the first user interface device, a user input dropping a flag dropped at a location in the graphical representation; displaying S204, by the first and the second user interface devices, the flag at the location and at every time point of the graphical representation; receiving S206, from the second user interface device, a user input selecting the flag; and temporally adjusting S208, on the second user interface device, the graphical representation to a time point that the flag was dropped.

Terms such as 'component', `module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A computer-implemented method of temporally synchronising first and second users interacting with a graphical representation of a sequence of events on respective first and second user interface devices, the computer-implemented method comprising:
displaying, on each of the first and the second user interface devices, the graphical representation;
receiving, from the first user interface device, a user input dropping a flag dropped at a location in the graphical representation;
displaying, by the first and the second user interface devices, the flag at the location and at every time point of the graphical representation;
receiving, from the second user interface device, a user input selecting the flag; and
temporally adjusting, on the second user interface device, the graphical representation to a time point that the flag was dropped.

2. The computer-implemented method of Claim 1, further comprising:
labelling, on the plurality of user interfaces, the flag in the graphical representation with the time point that the flag was dropped.

3. The computer-implemented method of Claim 1 or Claim 2, wherein the flag is substantially conical in shape.

4. The computer-implemented method of Claim 3, wherein the flag extends substantially upwards from its apex.

5. The computer-implemented method of any preceding claim, wherein the user input selecting the flag comprises a user input through the second user interface device or a user input through a user input device, wherein optionally the user input device comprises a mouse.

6. The computer-implemented method of any preceding claim, wherein the graphical representation represents a sequence of events associated with a part in a facility according to a plan received from a planning tool.

7. The computer-implemented method of Claim 6, wherein the sequence of events comprises events selected from a list of events including: moving the part, constructing one or more constituent pieces of the part, assembling the part, machining the part, painting the part, cutting the part, and drilling the part.

8. The computer-implemented method of Claim 6 or Claim 7, wherein the facility is selected from a list of facilities including: a warehouse and a factory.

9. The computer-implemented method of any of Claims 1 to 5, wherein the graphical representation represents a sequence of events associated with real-world entities in a scene, wherein optionally the scene is a combat scene.

10. The computer implemented method of any of Claims 1 to 5, wherein the graphical representation is a multiplayer videogame and wherein the first and second users are respective first and second players of the multiplayer videogame.

11. The computer-implemented method of any preceding claim, wherein the displaying, on each of the first and the second user interface devices, the graphical representation comprises:
displaying, on the first user interface device, the graphical representation at a first time point of the graphical representation; and
displaying simultaneously, on the second user interface device, the graphical representation at a second time point of the graphical representation,
wherein the first time point of the graphical representation is different to the second time point of the graphical representation.

12. The computer-implemented method of Claim 11, further comprising:
displaying, on each of the first and second user interface devices, a timeline covering all time points of the graphical representation;
receiving, from the first user interface device, a first time selection on the timeline to select the first time point; and
receiving, from the second user interface device, a second time selection on the timeline to select the second time point.

13. A computer-readable storage medium having instructions stored thereon that, when executed by one or more processors, cause the one or more processors to perform the computer-implemented method of any preceding claim.

14. A system comprising:
first and second user interfaces;
one or more processors; and
storage storing instructions that, when executed by the one or more processors, cause the one or more processors to perform the method of any of Claims 1 to 12.
